# EUROPÄISCHE PATENTANMELDUNG

(11) **EP 4 144 925 A1**
(43) Veröffentlichungstag der Anmeldung: **08.03.2023**
(21) Anmeldenummer: 22192933.4
(22) Anmeldetag: 30.08.2022
(51) Int. Cl.: E02F 3/627, A01B 59/06

(54) **ARBEITSFAHRZEUG-ANBAUTURM, ARBEITSFAHRZEUG-ANBAUVORRICHTUNG, SET UND VERFAHREN**

(30) Priorität: 07.09.2021 DE 202021104817 U
(71) Anmelder: Wilhelm Stoll Maschinenfabrik GmbH, 38268 Lengede/Broistedt (DE)
(72) Erfinder: Körner, Jens, 39114 Magdeburg (DE)
(74) Vertreter: REHBERG HÜPPE + PARTNER

(57) **Zusammenfassung**

Die Erfindung betrifft einen Arbeitsfahrzeug-Anbauturm (2) eines Nutzfahrzeugs oder Traktors. Der Arbeitsfahrzeug-Anbauturm (2) weist einen Frontlader-Befestigungskörper (5) und einen Tragkörper (4) auf. Der Frontlader-Befestigungskörper (5) und der Tragkörper (4) sind separat voneinander gefertigt. Der Frontlader-Befestigungskörper (5) und der Tragkörper (4) sind miteinander verschweißt. Der Tragkörper (4) ist mittels eines Massivumformverfahrens hergestellt.

## Beschreibung

### TECHNISCHES GEBIET DER ERFINDUNG

Die vorliegende Erfindung betrifft eine Arbeitsfahrzeug-Anbauvorrichtung und deren Bestandteile. Eine Arbeitsfahrzeug-Anbauvorrichtung dient der Befestigung eines Frontladers an einem Arbeitsfahrzeug, insbesondere einem Traktor. Des Weiteren betrifft die Erfindung ein Verfahren zur Herstellung eines Arbeitsfahrzeug-Anbauturms.

### STAND DER TECHNIK

Auf der Website
https://stoll-germany.com/de/frontlader/stoll-profiline
(Datum der Einsichtnahme: Anmeldetag der Prioritätsrechtsvoranmeldung)
ist eine Arbeitsfahrzeug-Anbauvorrichtung dargestellt, deren Komponenten als Anbauteile bezeichnet sind. Ein Anbauteil ist dabei ein Rahmenelement, welches sich in an dem Arbeitsfahrzeug angebautem Zustand ungefähr horizontal erstreckt und in einem vorderen Befestigungsabschnitt und einem hinteren Befestigungsabschnitt an dem Arbeitsfahrzeug, insbesondere an einem Chassis, einem Längsträger oder einem Antriebsstrang, befestigt werden kann. Mittig ist an dem Rahmenelement ein Turm anbaut, der sich in eingebautem Zustand ungefähr vertikal erstreckt. In dem oberen Endbereich verfügt der Turm über einen Frontlader-Befestigungskörper, der hier in einer Ausführungsform dargestellt ist, die auch als "Knochen" bezeichnet wird. Im Bereich des Knochens erfolgt eine Montage und Befestigung des Frontladers an dem Turm. Das Rahmenelement ist als umgeformtes Blechteil ausgebildet, während der Turm eine Schweißbaugruppe ist.

Die Druckschrift EP 3 158 842 B1 offenbart eine Arbeitsfahrzeug-Anbauvorrichtung, bei welcher das Rahmenelement an dem Antriebsstrang des Arbeitsfahrzeugs befestigt ist. Der vordere Befestigungsabschnitt des Rahmenelements ist dabei an dem vorderen Fahrwerksrahmen befestigt, während ein hinterer Befestigungsabschnitt des Rahmenelements an dem Schwungmassegehäuse befestigt ist. Auch hier wird der Arbeitsfahrzeug-Anbauturm zwischen dem vorderen Befestigungsabschnitt und dem hinteren Befestigungsabschnitt an das Rahmenelement angeschraubt. Das Rahmenelement kann eine strukturierte Oberfläche aufweisen und als Gussteil ausgebildet sein.

### AUFGABE DER ERFINDUNG

Der vorliegenden Erfindung liegt die Aufgabe zugrunde, einen Arbeitsfahrzeug-Anbauturm, eine Arbeitsfahrzeug-Anbauvorrichtung, ein Set mit mehreren Arbeitsfahrzeug-Anbautürmen oder mit mehreren Arbeitsfahrzeug-Anbauvorrichtungen und ein Verfahren zur Herstellung eines Arbeitsfahrzeug-Anbauturms vorzuschlagen, der, die oder das insbesondere hinsichtlich
- der Möglichkeiten für die Fertigung und/oder
- des Herstellungsaufwands und/oder
- der Möglichkeiten für die Wahl des Materials und/oder
- der mechanischen Eigenschaften, insbesondere der Festigkeit und/oder Härte, und/oder
- der Formgebung und/oder
- der Bauraumverhältnisse
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Arbeitsfahrzeug-Anbauturm vor. Ein derartiger Arbeitsfahrzeug-Anbauturm wird im englischsprachigen Raum auch als "Tower" bezeichnet und erstreckt sich in einem an dem Arbeitsfahrzeug montierten Zustand ungefähr vertikal. Der Arbeitsfahrzeug-Anbauturm verfügt über einen Frontlader-Befestigungskörper, wovon auch ein umgangssprachlich als "Knochen" bezeichneter Frontlader-Befestigungskörper umfasst ist. Der Frontlader-Befestigungskörper verfügt über eine Aufnahme für einen Frontlader und dient dem Halten des Frontladers an dem Arbeitsfahrzeug-Anbauturm und damit an dem Arbeitsfahrzeug. Des Weiteren verfügt der Arbeitsfahrzeug-Anbauturm über einen Tragkörper, welcher in dem im montierten Zustand oben liegenden Endbereich den Frontlader-Befestigungskörper trägt und sich vertikal erstreckt. Mittels des Tragkörpers erfolgt eine Verlagerung der von dem Frontlader-Befestigungskörpers bereitgestellten Aufnahme für den Frontlader vertikal nach oben, beispielsweise von einem Chassis oder Rahmen in eine Höhe im oberen Endbereich oder oberhalb einer Motorhaube des Arbeitsfahrzeugs. Der Tragkörper ist dabei insbesondere
- massiv ausgebildet,
- ein Vollkörper ohne hohle oder offene Innenräume und
- nicht aus einem Blech oder mehreren Blechen einer Schweißbaugruppe hergestellt und
- nicht als Gussteil ausgebildet.

Erfindungsgemäß sind der Frontlader-Befestigungskörper einerseits und der Tragkörper andererseits separat voneinander gefertigt. Die separate Fertigung ermöglicht, dass für die Fertigung unter Umständen unterschiedliche Verfahren eingesetzt werden und/oder (selbst bei gleichen Fertigungsverfahren) für die Fertigung unterschiedliche Prozessparameter gewählt werden können. Des Weiteren ermöglicht die separate Fertigung, dass für den Frontlader-Befestigungskörper einerseits und den Tragkörper andererseits unterschiedliche Materialien eingesetzt werden können. Nach der separaten Fertigung des Frontlader-Befestigungskörpers und des Tragkörpers erfolgt ein Verschweißen derselben miteinander.

Erfindungsgemäß ist der Tragkörper mittels eines Massivumformverfahrens hergestellt.

Im Rahmen der Erfindung wird unter einem Massivumformverfahren ein Verfahren verstanden, in dem ein dreidimensionaler Rohling dreidimensional umgeformt wird. Das Massivumformen umfasst dabei beispielsweise ein Gesenkschmieden oder ein Fließpressen oder Freiformschmieden. Die Massivumformung ist hingegen abgegrenzt gegenüber einer Blechumformung, bei der näherungsweise zweidimensionale Werkstücke, nämlich Bleche, umgeformt werden, ohne dass sich die Blechdicke signifikant verändert. Nähere Informationen zu einer Massivumformung sind bspw.
- der Fachliteratur "Industrieverband Massivumformung: Fachbuch Massivumformung kurz und bündig, April 2013, ISBN 978-3-928726-32-0" und
- dem Handbuch "Eckhart Doege, Bernd-Arno Behrens: Handbuch Umformtechnik: Grundlagen, Technologien, Maschinen, Springer-Verlag (Berlin/Heidelberg), 2010, ISBN 978-3-642-04248-5"
zu entnehmen. Die Massivumformung kann eine Kaltmassivumformung sein, welche bei Raumtemperaturen bis hin zu maximal 500 °C ausgeführt werden, eine Halbwarmmassivumformung sein, die bei Temperaturen von 500 °C bis ca. 800 °C durchgeführt wird, oder eine Warmmassivumformung, die zwischen 1.000 °C und maximal 1.300 °C durchgeführt wird. Der Rohling kann bspw. ein gewalzter Stabstahl (beispielsweise mit einem runden oder rechteckigen Querschnitt), ein stranggepresstes Profil oder ein gegossener Rohling sein. Bei einem Freiformschmieden kann eine Umformung eines gegossenen Blocks beliebiger Geometrie erfolgen. Bei dem Massivumformen wird der Rohling mit Hilfe von Werkzeugen durch hohe Kräfte plastisch und spanlos umgeformt. Bei dem Massivumformen kann ein Schließen eventuell vorhandener Poren erfolgen und Einschlüsse können zusammen mit dem Gefüge in Fließrichtung des Werkstoffs gestreckt werden. Mittels massiv umgeformter Teile können typische gestreckte Gefüge- oder Faserstrukturen erzeugt werden, die eine erhöhte Belastbarkeit insbesondere in Richtung der Streckung oder der Faserrichtung aufweisen. Durch geeignete Wahl der Umformrichtung kann eine gezielte Anpassung an Hauptbeanspruchungsverläufe erfolgen. Je nach Umformtemperatur kann ein Gefüge entweder kaltverfestigt sein oder feinkörnig rekristallisiert sein. Abhängig von der Kombination von Legierung und Prozessführung kann die Warmumformung bereits eine thermomechanischen Behandlung sein mit positiven Auswirkungen auf die Gefügestruktur und auf die damit verbundenen mechanischen Eigenschaften. Als Werkzeuge für die Massivumformung können beliebige Metalle und Metall-Legierungen Einsatz finden (beispielsweise Baustähle, Kohlenstoff- und Vergütungsstähle, hochlegierte Stähle). Vorzugsweise finden beim Kaltumformen lediglich Stahlsorten Einsatz, deren Kohlenstoffgehalt auf ca. 0,5% und/oder die Summe der Legierungsbestandteile auf ca. 5 % beschränkt ist. Übliche in der Massivumformung angewendete Herstellverfahren werden laut DIN 8582 der Gruppe des "Druckumformens" zugerechnet, in welcher eine Unterteilung nach Walzen, Freiformen, Gesenkformen, Eindrücken und Durchdrücken erfolgt. Vorzugsweise findet im Rahmen der Erfindung ein Gesenkschmieden Einsatz, wobei als Schmiedetemperatur beispielsweise eine Temperatur im Bereich von 1.150 °C bis 1.250 °C verwendet wird. Möglich ist auch, dass im Rahmen der Erfindung der Tragkörper mittels eines Freiformschmiedens hergestellt wird, bei dem eine inkrementelle Umformung erfolgt und mit mehreren Pressenhüben die gewünschte Geometrie herbeigeführt wird.

Die vorliegende Erfindung beruht auf der Erkenntnis, dass es bisher aus dem Stand der Technik lediglich bekannt ist, den Arbeitsfahrzeug-Anbauturm als Schweißbaugruppe herzustellen, wobei der Tragkörper aus mehreren komplex geformten und zusammengesetzten sowie miteinander verschweißten Blechen besteht, oder als Gussteil herzustellen. Die erfindungsgemäße Herstellung des Tragkörpers mittels eines Massivumformverfahrens ist vorteilhaft, da bei Einsatz eines Massivumformens höhere Festigkeiten als gemäß dem Stand der Technik herbeigeführt werden können und auch Einschränkungen hinsichtlich der Geometrie des Tragkörpers, wie diese für die Gestaltung als Schweißbaugruppe oder als Gussteil bestehen, nicht oder lediglich reduziert gelten. Möglich ist bei der Herstellung mittel Massivumformens auch eine gegenüber dem Stand der Technik abweichende Gestaltung der Geometrie des Tragkörpers, was vorteilhaft sein kann für das optische Erscheinungsbild des Arbeitsfahrzeug-Anbauturms, aber auch für die Bauraumbedingungen. Die Ausstattung des Tragkörpers mit einer höheren Steifigkeit mittels des Massivumformens kann auch dazu führen, dass der Tragkörper einen kleineren Querschnitt aufweisen kann, was die Sichtbehinderung durch den Tragkörper verringern kann und/oder den verfügbaren Bauraum im Umgebungsbereich des Tragkörpers erweitern kann. Schließlich kann der mittels des Massivumformverfahrens hergestellte Tragkörper auch dazu genutzt werden, größere Lasten infolge des Frontladers, des daran befestigten Werkzeugs und der auf das Werkzeug wirkenden Kräfte aufzunehmen und zu übertragen.

Die Erfindung umfasst Ausführungsformen, bei denen eine untere Stirnfläche des Frontlader-Befestigungskörpers an einer oberen Stirnfläche des Tragkörpers anliegt und die Schweißnähte zur Verbindung des Frontlader-Befestigungskörpers und des Tragkörpers seitlich von der Kontaktfläche angeordnet sind. Verfügt der Frontlader-Befestigungskörper über eine größere laterale Erstreckung als der Tragkörper, ergibt sich seitlich von der Kontaktfläche eine Stufe im Übergang von dem Tragkörper zu dem Frontlader-Befestigungskörper. In diesem Fall kann die Schweißnaht an der Stufe als Kehlnaht ausgebildet sein. Ist hingegen die laterale Erstreckung des Frontlader-Befestigungskörpers nicht größer als die laterale Erstreckung des Tragkörpers oder soll der für die Kehlnaht verfügbare Raum vergrößert werden, kann der Tragkörper im Bereich der Schweißnaht, über die der Frontlader-Befestigungskörper mit dem Tragkörper verschweißt ist, eine Fase oder einen Abschnitt mit verringerter Dicke aufweisen. Die Fase oder der Abschnitt kann dann mit der Schweißnaht gefüllt sein, womit dann die Schweißnaht bündig zu der Außenfläche des Tragkörpers sein kann oder sogar über diese in lateraler Richtung hinausgehen kann. Auf diese Weise kann somit einerseits eine Beeinflussung der Geometrie der Schweißnaht erfolgen und andererseits der Raum für die Schweißnaht vergrößert werden, so dass auch eine dickere Schweißnaht zur Verbesserung der Verbindung und Erhöhung der Steifigkeit eingesetzt werden kann. Die Fertigung der Fase oder des Abschnitts mit verringerter Dicke erfolgt dabei vorzugsweise bereits während des Massivumformens.

Für die Art der Herstellung des Frontlader-Befestigungskörpers gibt es vielfältige Möglichkeiten. Vorzugsweise ist der Frontlader-Befestigungskörper mittels eines Massivumformverfahrens oder Schmiedeverfahrens als Sonderform des Massivumformverfahrens hergestellt.

Möglich ist, dass der Frontlader-Befestigungskörper und der Tragkörper beispielsweise spanabhebend oder schleifend nachbearbeitet sind, um eine vollflächige Anlage im Bereich der Kontaktfläche zu gewährleisten und/oder eine optimale Vorbereitung der Schweißnaht ohne störende oder zu große Fugen zwischen dem Tragkörper und dem Frontlader-Befestigungskörper zu gewährleisten. Für einen Vorschlag der Erfindung wird allerdings der Tragkörper mit einer Stirnfläche, an welcher der Frontlader-Befestigungskörper anliegt, in dem Massivumformverfahren mit einer Toleranz gefertigt, die in vertikaler Richtung zu der Stirnfläche ± 1 mm beträgt. Das Entsprechende kann für den Frontlader-Befestigungskörper gelten. Dieser Ausgestaltung liegt die Erkenntnis zugrunde, dass es vorteilhaft ist, wenn die zuvor erläuterte zusätzliche Bearbeitung der Stirnfläche nicht erfolgen muss, da dies den Fertigungsaufwand und die Kosten unter Umständen drastisch erhöht. Erfolgt andererseits für das Massivumformverfahren die Gestaltung der Werkzeuge sowie der Prozessbedingungen derart, dass die Toleranz im Bereich von ± 1 mm liegt, kann erfindungsgemäß dennoch die Anlage im Bereich der Stirnflächen erfolgen. Erfindungsgemäß konnte festgestellt werden, dass sich etwaige lokale Zwischenräume oder Spalte bei der genannten Toleranz nicht negativ auf die Kraftübertragung zwischen dem Frontlader-Befestigungskörper und dem Tragkörper auswirken. Des Weiteren wurde erkannt, dass derartige Zwischenräume und Spalte auf einfache Weise mittels der Schweißnaht gefüllt und/oder überbrückt werden können, ohne dass es zu signifikanten Beeinträchtigungen der Festigkeit kommt.

Möglich ist, dass der Tragkörper ausschließlich strangartig mit einer lediglich geringfügig in Richtung seiner Längserstreckung, also in eingebautem Zustand in Höhenrichtung, variierender Querschnittsfläche und sogar nicht wesentlich variierender Querschnittsgeometrie ausgebildet ist, wobei dann im oberen Endbereich der Frontlader-Befestigungskörper angeordnet sein kann, während im unteren Endbereich eine Befestigung an einem Rahmenelement, welches wiederum an dem Fahrzeugrahmen, Chassis, Längsträger oder Antriebsstrang des Arbeitsfahrzeugs befestigt ist, erfolgen kann. Für einen Vorschlag der Erfindung weist der Tragkörper in dem dem Frontlader-Befestigungskörper abgewandten Endbereich einen Rahmenelement-Befestigungsabschnitt auf. In diesem Fall kann beispielsweise der Tragkörper einen Vertikalabschnitt aufweisen, der in montiertem Zustand vertikal orientiert ist und einen sich nicht wesentlich ändernden Querschnitt oder bspw. eine nach oben größer werdende Querschnittsfläche aufweist und im oberen Endbereich den Frontlader-Befestigungskörper trägt. Darüber hinaus verfügt dann der Tragkörper über einen Horizontalabschnitt, der den Rahmenelement-Befestigungsabschnitt bildet. Dieser Horizontalabschnitt ist in montiertem Zustand des Arbeitsfahrzeug-Anbauturms ungefähr horizontal und/oder parallel zu einem Längsträger, Chassis oder Antriebsstrang des Arbeitsfahrzeugs orientiert. Möglich ist, dass dieser Horizontalabschnitt mit dem Vertikalabschnitt eine L-Form ausbildet, also sich von dem Vertikalabschnitt lediglich nach vorne oder hinten an dem Arbeitsfahrzeug erstreckt. Ebenfalls möglich ist aber, dass der Horizontalabschnitt mit dem Vertikalabschnitt die Form eines umgekehrten T bildet, so dass sich der Horizontalabschnitt an dem Arbeitsfahrzeug sowohl nach vorne als auch nach hinten erstreckt. Der von dem Horizontalabschnitt gebildete Rahmenelement-Befestigungsabschnitt dient der Befestigung eines Rahmenelements bei zweiteiliger Ausbildung der Arbeitsfahrzeug-Anbauvorrichtung. Hierbei kann das Rahmenelement mit dem Rahmenelement-Befestigungsabschnitt beispielsweise verschraubt oder verschweißt werden, wobei ergänzend möglich ist, dass (bspw. über mindestens einen Verbindungskonus) auch ein Formschluss hergestellt wird. Das Rahmenelement ist dann schließlich an dem Längsträger, Chassis oder Antriebsstrang des Arbeitsfahrzeugs befestigt.

Für die Geometrie des Rahmenelement-Befestigungsabschnitts gibt es im Rahmen der Erfindung vielfältige Möglichkeiten. Vorzugsweise weist der Rahmenelement-Befestigungsabschnitt eine größere Erstreckung in Richtung des Rahmens oder Antriebsstrangs des Arbeitsfahrzeugs auf als ein benachbarter, darüber angeordneter Teilabschnitt des Tragkörpers, insbesondere als der Vertikalabschnitt.

Um lediglich ein die Erfindung nicht beschränkendes Beispiel zu nennen, kann der Rahmenelement-Befestigungsabschnitt als horizontal orientiertes Rechteck ausgebildet sein, wobei die Form der Ränder des Rahmenelement-Befestigungsabschnitts auch beliebig gegenüber der rechteckigen Gestaltung abweichen kann. Für einen Vorschlag der Erfindung weist der Rahmenelement-Befestigungsabschnitt einen konvex geformten, konkav geformten, kurvenförmigen oder mäanderförmigen Rand auf. Diese Gestaltung des Rands ist insbesondere vorteilhaft, wenn eine Verbindung des Rahmenelement-Befestigungsabschnitts einerseits und des Rahmenelements mittels eines Verschweißens entlang des Randes erfolgen soll, da die nicht geradlinige Ausgestaltung des Rands eine Vergrößerung der Länge der Schweißnaht zur Folge hat.

Im Rahmen der Erfindung erfolgt insbesondere die Fertigung des Rahmenelement-Befestigungsabschnitts und ggf. des nicht geradlinigen Rands unmittelbar in dem Massivumformverfahren.

Grundsätzlich kann der Tragkörper einen beliebigen Querschnitt aufweisen und beispielsweise plattenförmig ausgebildet sein. Für einen Vorschlag der Erfindung weist der Tragkörper mindestens eine Verstärkungsrippe auf, die ebenfalls mittels des Massivumformverfahrens hergestellt sein kann. Hierbei erstreckt sich die Verstärkungsrippe mit ihrer Längserstreckung in Höhenrichtung des Tragkörpers bei an dem Arbeitsfahrzeug montiertem Zustand und ausschließlich oder vorrangig im Bereich des Vertikalabschnitts. Die Höhe der Verstärkungsrippe kann dann in lateraler Richtung orientiert sein. Mit dem Einsatz der Verstärkungsrippe kann das Trägheitsmoment des Tragkörpers erhöht werden, womit die Beanspruchung des Tragkörpers auf Biegung und/oder hinsichtlich einer Torsion verbessert werden kann. Möglich ist auch, dass zwei (oder mehr) derartige Verstärkungsrippen vorhanden sind, die sich parallel oder V-förmig in Längsrichtung des Vertikalabschnitts erstrecken können. Vorzugsweise befindet sich die mindestens eine Verstärkungsrippe auf der lateralen Außenseite bei an dem Arbeitsfahrzeug montiertem Zustand des Arbeitsfahrzeug-Anbauturms. Möglich ist aber auch, dass auf beiden lateralen Außenseiten jeweils mindestens eine Verstärkungsrippe angeordnet ist.

Hierbei können zwei Verstärkungsrippen auch in horizontaler Richtung, insbesondere in Richtung der Fahrzeuglängsachse, versetzt zueinander angeordnet sein, wobei die Verstärkungsrippen dann insbesondere abseits der sogenannten neutralen Faser für die Biegung des Tragkörpers angeordnet sind.

Die Verstärkungsrippen können einen beliebigen Querschnitt aufweisen. Vorgeschlagen wird, dass die Verstärkungsrippe einen abgerundeten Querschnitt aufweist. Die Abrundung kann dabei im Übergangsbereich zu einem plattenförmigen Grundkörper des Tragkörpers vorhanden sein oder im Bereich der außenliegenden Stirnfläche der Verstärkungsrippe. Die Abrundung des Querschnitts der Verstärkungsrippe hat einerseits Vorteile für einen Massivumformprozess, da die Abrundung das Fließen des Materials vereinfacht oder verbessert. Möglich ist auch, dass die Abrundung der Verstärkungsrippe einen etwaigen Lackiervorgang des Arbeitsfahrzeug-Anbauturms vereinfacht, da der Lack besser auf einen abgerundeten Querschnitt aufgebracht werden kann als in abgewinkelte Kehlen des Querschnitts.

Die erfindungsgemäße separate Herstellung des Tragkörpers und des Frontlader-Befestigungskörpers ermöglicht bspw. eine Wahl der jeweils eingesetzten Materialien und der eingesetzten Herstellungsverfahren und/oder der Prozessparameter derart, dass die Härte und/oder Festigkeit des Frontlader-Befestigungskörpers größer ist als die Härte und/oder die Festigkeit des Tragkörpers. Möglich ist hierdurch beispielsweise, dass ein teureres Material und/oder ein aufwendigeres Herstellungsverfahren für den verhältnismäßig kleinvolumigen Frontlader-Befestigungskörper eingesetzt werden kann bei Bereitstellung der erforderlichen höheren Härte und/oder Festigkeit für denselben als für den Tragkörper, der die geringere Härte und/oder Festigkeit aufweisen kann. Hierdurch können der Herstellungsaufwand und/oder die Kosten reduziert werden. Die Gestaltung der Härte und/oder Festigkeit des Frontlader-Befestigungskörpers kann dann gezielt an die Wechselwirkung mit dem Frontlader angepasst werden.

Eine weitere Vereinfachung der Herstellung kann erfindungsgemäß dadurch erfolgen, dass der Tragkörper eine Positionierhilfe aufweist. Die Positionierhilfe dient einer Vorgabe einer Relativlage des Tragkörpers gegenüber dem Frontlader-Befestigungskörper und/oder des Tragkörpers gegenüber dem Rahmenelement-Befestigungsabschnitt oder dem Rahmenelement. Soll beispielsweise eine Verschweißung erfolgen, kann vor Beginn des Schweißvorgangs über diese Positionierhilfe die vorbestimmte Relativlage herbeigeführt werden, wobei die Positionierhilfe auch während des Schweißvorgangs die angestrebte Relativlage aufrechterhalten kann. Auch für eine Verbindung mittels eines Verschraubens, beispielsweise eines Verschraubens eines Rahmenelement-Befestigungsabschnitts mit einem Rahmenelement, kann mittels der Positionierhilfe die Relativlage zwischen dem Rahmenelement-Befestigungsabschnitt und dem Rahmenelement vorgegeben werden. Möglich ist dabei, dass eine Positionierhilfe des Tragkörpers zusammenwirkt mit einem Gegenelement des Frontlader-Befestigungskörpers, des Rahmenelement-Befestigungsabschnitts oder des Rahmenelements, indem eine Art Anschlag zwischen der Positionierhilfe und dem Gegenelement gebildet ist. Ein derartiger Anschlag kann lediglich eine Vorgabe einer Position oder Orientierung in eine Richtung gewährleisten oder auch in mehrere Richtungen. Möglich ist auch, dass mehrere derartige Positionierhilfen zusammenwirken, um die Relativlage vorzugeben.

Um lediglich einige die Erfindung nicht beschränkende Beispiele zu nennen, kann sich die Erstreckung des Tragkörpers in Längsrichtung des Arbeitsfahrzeugs von dem an dem Rahmenelement-Befestigungsabschnitt angrenzenden Endbereich des Vertikalabschnitts des Tragkörpers zu der entsprechenden Erstreckung in dem Endbereich, an den der Rahmenelement-Befestigungsabschnitt angeschweißt ist, um mindestens 10%, mindestens 20%, mindestens 30 %, mindestens 40 % oder mindestens 50 % oder mindestens 60 % vergrößern.

Möglich ist beispielsweise auch, dass die Erstreckung des Rahmenelement-Befestigungsabschnitts in Richtung der Längsachse des Arbeitsfahrzeugs um 20 bis 100 % größer ist, vorzugsweise 30 % bis 80 % größer ist als die Erstreckung des benachbarten Vertikalabschnitts des Tragkörpers.

Im Rahmen der Erfindung können auch weitere Elemente an den Tragkörper angeschweißt oder angeschraubt sein. Beispielsweise kann an den Tragkörper ein Halteelement für ein Bauteil angeschweißt sein. Bei dem dann über das Halteelement gehaltenen Bauteil kann es sich beispielsweise um eine Hydraulikeinheit, eine hydraulische Kopplungseinheit u. ä. handeln. In diesem Fall kann das Halteelement bspw. in dem oberen Endbereich des Vertikalabschnitts des Tragkörpers benachbart dem Frontlader-Befestigungskörper angeschweißt sein.

Für die Herstellung des Tragkörpers mittels Massivumformens kann ein beliebiger Rohling verwendet werden. Vorzugsweise handelt es sich bei dem Rohling um einen stangenförmigen Rohling oder ein abgelenktes Strangprofil oder einen quaderförmigen Rohling oder einen gegossenen Rohling.

Für einen weiteren Vorschlag der Erfindung weist der Tragkörper mindestens eine Kröpfung auf, die vorzugsweise auch bereits während des Massivumformens hergestellt wird. Beispielsweise kann der Tragkörper über zwei vertikale Endbereiche verfügen, die parallel zueinander angeordnet sind und jeweils über eine Kröpfung übergehen in einen Verbindungsabschnitt, über welchen je nach Neigung und Länge des Verbindungsabschnitts ein lateraler Versatz der beiden Endbereiche herbeigeführt werden kann. Dies ist insbesondere dann von Vorteil, wenn der Ort, an dem der Arbeitsfahrzeug-Anbauturm an dem Arbeitsfahrzeug befestigt ist, lateral versetzt ist zu dem Ort, an welchem der Frontlader an dem Arbeitsfahrzeug-Anbauturm befestigt werden soll. Dieser laterale Versatz kann durch den Verbindungsabstand überbrückt werden.

Grundsätzlich ist möglich, dass der Arbeitsfahrzeug-Anbauturm in dem Zustand an dem Ende des Massivumformvorgangs ohne weitere Materialbearbeitungsprozesse (u. U. aber mit ergänzender Lackierung) in dem Arbeitsfahrzeug-Anbauturm eingesetzt ist. Vorzugsweise findet ein Entgraten des Tragkörpers statt. Hierbei erfolgt beispielsweise das Entgraten des Tragkörpers bereits in dem Massivumformverfahren, indem ein Werkzeug des Massivumformverfahrens bereits ein Trennmesser aufweist, über welches ein Entgraten erfolgt.

Eine weitere Lösung der der Erfindung zugrunde liegenden Aufgabe stellt eine Arbeitsfahrzeug-Anbauvorrichtung vor, die einen Arbeitsfahrzeug-Anbauturm aufweist, wie dieser zuvor erläutert worden ist, und ein Rahmenelement. Das Rahmenelement kann dann der Befestigung der Arbeitsfahrzeug-Anbauvorrichtung an dem Arbeitsfahrzeug (insbesondere im Bereich eines Längsträgers, im Bereich des Antriebsstrangs oder im Bereich des Chassis) dienen, wobei über die Geometrie des Rahmenelements eine Anpassung an die Anbindungsstellen an dem Arbeitsfahrzeug erfolgen kann. Möglich ist auch, dass durch das im Zusammenhang mit dem Arbeitsfahrzeug-Anbauturm verwendete Rahmenelement eine Anpassung der Arbeitsfahrzeug-Anbauvorrichtung an unterschiedliche Typen von Arbeitsfahrzeugen und deren Anbaubedingungen erfolgt.

Möglich ist, dass das Rahmenelement integraler Bestandteil des Tragkörpers ist, wobei vorzugsweise dann auch das Rahmenelement mittels des Massivumformverfahrens hergestellt ist.

Möglich ist aber auch, dass das Rahmenelement separat von dem Tragkörper gefertigt wird und das Rahmenelement mit dem Tragkörper (vorzugsweise mit dessen Rahmenelement-Befestigungsabschnitt) verschraubt und/oder verschweißt und/oder vernietet und/oder mittels eines Formschlusses verbunden und/oder verklebt ist. Möglich ist dabei, dass auch ein Halteelement oder ein weiteres Anbauteil mittels Schweißen, Schrauben, Nieten, Formschluss oder Kleben gefügt wird, wobei für die Verbindung der genannten Bauelemente dieselben oder unterschiedliche Fügeverfahren zum Einsatz kommen können. Zusätzlich zu einem Verschrauben oder Verschweißen kann auch ein Formschluss hergestellt werden, der einerseits der Definition der relativen Lage zwischen dem Rahmenelement und dem Tragkörper dienen kann und andererseits der zusätzlichen Verbindung und Übertragung von Kräften dienen kann. Für einen derartigen Formschluss können beispielsweise auch konusförmige Kopplungskörper eingesetzt werden, wie diese beispielsweise aus der Druckschrift FR 2 972 203 A1 bekannt sind.

Eine weitere Lösung der der Erfindung zugrunde liegenden Aufgabe stellt ein Set dar. Dieses Set beinhaltet entweder mehrere Arbeitsfahrzeug-Anbautürme, wie diese zuvor erläutert worden sind, oder mehrere Arbeitsfahrzeug-Anbauvorrichtungen. In dem Set weisen die Arbeitsfahrzeug-Anbautürme oder die Arbeitsfahrzeug-Anbauvorrichtungen gleiche Tragkörper auf. Die mehreren Tragkörper können dann in demselben Massivumformverfahren hergestellt werden und bilden Gleichteile für die unterschiedlichen Arbeitsfahrzeug-Anbautürme oder Arbeitsfahrzeug-Anbauvorrichtungen des Sets. Für diese Ausgestaltung weisen die Arbeitsfahrzeug-Anbautürme oder Arbeitsfahrzeug-Anbauvorrichtungen des Sets unterschiedliche Frontlader-Befestigungskörper und/oder Rahmenelemente auf. Alternativ oder kumulativ können in dem Set die Tragkörper an unterschiedlichen Positionen und/oder in unterschiedlichen Orientierungen mit baugleichen Frontlader-Befestigungskörpern und/oder baugleichen Rahmenelementen verbunden sein. Die Arbeitsfahrzeug-Anbautürme oder Arbeitsfahrzeug-Anbauvorrichtungen des Sets sind dann für Arbeitsfahrzeuge unterschiedlicher Typen bestimmt.

Weisen beispielsweise Arbeitsfahrzeuge unterschiedlicher Typen unterschiedliche Anbaupunkte für das Rahmenelement (beispielsweise mit unterschiedlichen Abständen oder unterschiedlichen Relativlagen) auf, können Arbeitsfahrzeug-Anbauvorrichtungen mit für die unterschiedlichen Typen spezifischen Rahmenelementen ausgestattet sein, so dass bei baugleichen Tragkörpern über die Nutzung unterschiedlicher Rahmenelemente eine Anpassung an die unterschiedlichen Typen der Arbeitsfahrzeuge erfolgen kann. Alternativ oder kumulativ möglich ist, dass bei Verwendung derselben Tragkörper in dem Set unterschiedliche spezifische Frontlader-Befestigungskörper verwendet werden, um eine Verbindung der Arbeitsfahrzeug-Anbautürme mit unterschiedlichen Frontladern mit unterschiedlichen Aufnahmen oder Anschlussmaßen zu gewährleisten.

Eine weitere Lösung der der Erfindung zugrunde liegenden Aufgabe stellt ein Verfahren zur Herstellung eines Arbeitsfahrzeug-Anbauturms dar, der grundsätzlich so ausgebildet sein kann, wie dieses zuvor erläutert worden ist, und bei dem zunächst eine Fertigung des Frontlader-Befestigungskörpers und des Tragkörpers als separate Teile erfolgt. Hierbei wird der Tragkörper mittels eines Massivumformverfahrens hergestellt. Es erfolgt dann ein Verschweißen des Frontlader-Befestigungskörpers und des Tragkörpers miteinander.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine laterale Ansicht einer Arbeitsfahrzeug-Anbauvorrichtung mit einem Arbeitsfahrzeug-Anbauturm und einem Rahmenelement.
- **Fig. 2**: zeigt eine Ansicht der Arbeitsfahrzeug-Anbauvorrichtung gemäß Fig. 1 schräg von oben.
- **Fig. 3**: zeigt die Arbeitsfahrzeug-Anbauvorrichtung gemäß Fig. 1 und 2 in einer Ansicht von oben.
- **Fig. 4**: zeigt einen Teilausschnitt des Arbeitsfahrzeug-Anbauturms gemäß Fig. 1 bis 3 in Befestigungsbereich zwischen einem Frontlader-Befestigungskörper und einem oberen Ende des Tragkörpers.
- **Fig. 5 und 6**: zeigen Alternativen für die Gestaltung der Schweißnähte und der angrenzenden Flächen im Befestigungsbereich zwischen dem Tragkörper und dem Frontlader-Befestigungskörper.

### FIGURENBESCHREIBUNG

In der vorliegenden Anmeldung sind (sofern dies nicht explizit anderweitig beschrieben ist) Bezeichnungen für die Orientierungen wie "in Längsrichtung", "in Querrichtung", "in lateraler Richtung", "vertikal" u. ä. auf die Richtungen des Arbeitsfahrzeugs bezogen, an dem die erfindungsgemäße Arbeitsfahrzeug-Anbauvorrichtung befestigt ist. Diese Bezeichnungen umfassen dabei auch Orientierungen, die um ±10°, ±20° oder ±30° gegenüber der exakten genannten Orientierung abweichen.

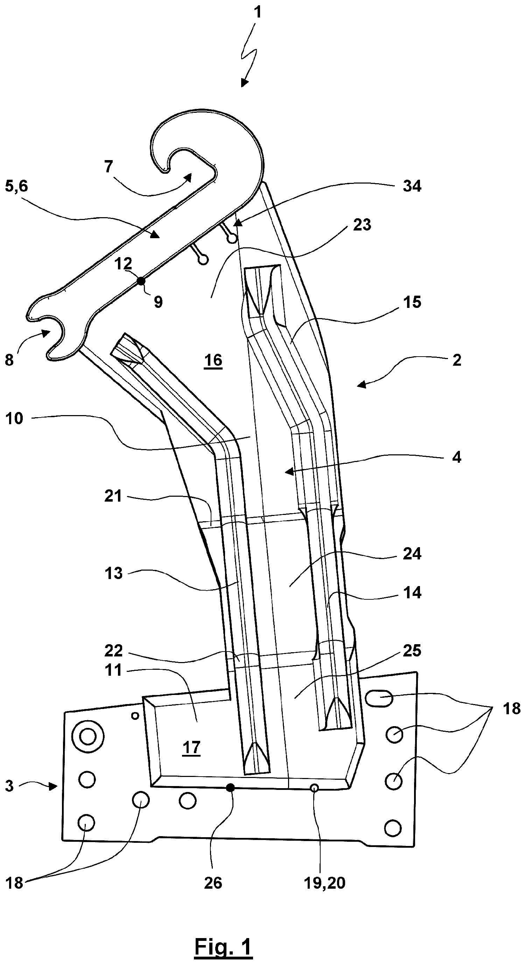

**Fig. 1** zeigt eine Arbeitsfahrzeug-Anbauvorrichtung 1. Die Arbeitsfahrzeug-Anbauvorrichtung 1 verfügt über einen Arbeitsfahrzeug-Anbauturm 2 und ein Rahmenelement 3. Der Arbeitsfahrzeug-Anbauturm 2 verfügt wiederum über einen Tragkörper 4 und einen Frontlader-Befestigungskörper 5, die miteinander verschweißt sind.

Gemäß dem Ausführungsbeispiel in Fig. 1 ist der Frontlader-Befestigungskörper 5 in einer Ausführungsform dargestellt, die umgangssprachlich auch als Knochen 6 bezeichnet wird. Der Frontlader-Befestigungskörper 5 verfügt über zwei Aufnahmen 7, 8, in welchen entsprechende Aufnahmekörper des Frontladers angeordnet werden können und vorzugsweise verriegelt werden, womit eine starre Befestigung eines Endbereichs des Frontladers an dem Frontlader-Befestigungskörper 5 erfolgt.

Der Frontlader-Befestigungskörper 5 verfügt auf seiner Unterseite über eine Stirnfläche 9. Die Stirnfläche 9 verfügt über einen mittigen ebenen Teilabschnitt sowie kurvenförmige Endabschnitte. Der Frontlader-Befestigungskörper 5 ist insbesondere durch Massivumformen oder Schmieden hergestellt.

Der Tragkörper 4 verfügt über einen Vertikalabschnitt 10 sowie einen Horizontalabschnitt 11. Für das hier dargestellte Ausführungsbeispiel bilden der Vertikalabschnitt 10 und der Horizontalabschnitt 11 in der Seitenansicht ein (gespiegeltes) L, wobei sich der Horizontalabschnitt 11 nach vorne oder hinten erstrecken kann. Durchaus möglich ist aber auch, dass sich der Horizontalabschnitt 11 auf beiden Seiten von dem Vertikalabschnitt 10 erstreckt, womit der Tragkörper die Form eines umgekehrten T hat.

Im Bereich des Vertikalabschnitts 10 verändert sich die Erstreckung des Vertikalabschnitts 10 in Richtung der Längsachse des Arbeitsfahrzeugs, indem sich diese Erstreckung von dem Horizontalabschnitt 11 in Richtung des Frontlader-Befestigungskörpers 5 zunehmend vergrößert. Diese Veränderung der Erstreckung berücksichtigt die mechanischen Beanspruchungen des Tragkörpers 4 infolge der von dem Frontlader hierauf ausgeübten Kräfte.

Der Vertikalabschnitt 10 verfügt in dem oberen Endbereich über eine Stirnfläche 12, im Bereich welcher an dem Tragkörper 4 die Stirnfläche 9 anliegt. Die Konturierung der Stirnfläche 12 in der Seitenansicht entspricht dabei der Konturierung der Stirnfläche 9.

Im Bereich des Vertikalabschnitts 10 erstrecken sich in vertikaler Richtung Verstärkungsrippen 13, 14. Die Verstärkungsrippen 13, 14 setzen sich wie dargestellt auch in den Horizontalabschnitt 11 fort. Die Verstärkungsrippen 13, 14 sind in einem unteren Teilabschnitt des Vertikalabschnitts 10 ungefähr parallel zueinander orientiert, während diese dann in einem oberen Teilabschnitt des Vertikalabschnitts 10 V-förmig nach oben divergieren, wobei diese vorzugsweise dem Verlauf des jeweils zugeordneten vorderen und hinteren Randes des Vertikalabschnitts 10 folgen. Die Verstärkungsrippen 13, 14 verfügen dabei über eine gleiche oder veränderliche Querschnittsgeometrie. Vorzugsweise gehen die Verstärkungsrippen 13, 14 über Abrundungen 15 über in einen Grundkörper 16 des Tragkörpers 4.

Eine Herstellung des Tragkörpers 4 erfolgt mittels Massivumformen. Hierbei kann bereits in dem Massivumformvorgang eine Fertigung der Stirnfläche 12 erfolgen, ohne dass eine Nachbearbeitung der Stirnfläche 12 erfolgt. Auch die Verstärkungsrippen 13, 14 und/oder der Horizontalabschnitt 11 werden in dem Massivumformvorgang vorzugsweise aus dem Rohling hergestellt, ohne dass eine ergänzende Nachbearbeitung erfolgt.

Der Horizontalabschnitt 11 des Tragkörpers 4 bildet einen Rahmenelement-Befestigungsabschnitt 17. An dem Rahmenelement-Befestigungsabschnitt 17 erfolgt die Befestigung des Rahmenelements 3, was durch Verschweißen entlang des Randes des Rahmenelement-Befestigungsabschnitts 17 erfolgen kann oder durch Verschraubung, wozu dann (abweichend zu dem dargestellten Ausführungsbeispiel) entsprechende Bohrungen in dem Rahmenelement-Befestigungsabschnitt 17 und dem Rahmenelement 3 vorzusehen sind.

In Fig. 1 ist zu erkennen, dass das Rahmenelement 3 über eine Vielzahl von Befestigungsbohrungen 18 verfügt. Mittels dieser Befestigungsbohrungen 18 erfolgt die Befestigung des Rahmenelements 3 an dem Arbeitsfahrzeug.

Optional möglich ist, dass der Tragkörper 4 im Rahmenelement-Befestigungsabschnitt 17 über eine Positionierhilfe 19 verfügt, die in Wechselwirkung tritt mit einem Gegenelement 20 des Rahmenelements 3. Für das dargestellte Ausführungsbeispiel handelt es sich bei dem Positionierelement 19 um eine halbzylindrische Ausnehmung, in der das als zylindrischer Stift ausgebildete Gegenelement 20 Aufnahme finden kann. Vor der Befestigung des Tragkörpers 4 an dem Rahmenelement 3 kann über die Wechselwirkung zwischen den Positionierelement 19 und dem Gegenelement 20 die relative Lage des Tragkörpers 4 gegenüber dem Rahmenelement 3 vorgegeben werden. Möglich ist, dass mehrere Positionierelemente 19 an dem Tragkörper 4 vorgesehen sind, wobei dann für die Verbindung des Tragkörpers 4 mit unterschiedlichen Rahmenelementen 3 unterschiedliche Positionierelemente 19 verwendet werden. Möglich ist alternativ oder kumulativ, dass Rahmenelemente 3 mit unterschiedlichen Geometrien für die Verbindung mit Arbeitsfahrzeugen unterschiedlicher Typen ein Gegenelement 20 an einer geeigneten Stelle aufweisen, die dann jeweils in Wechselwirkung treten mit demselben Positionierelement 19 des Tragkörpers 4, um dann spezifisch die relative Lage des jeweiligen Rahmenelements 3 gegenüber dem Tragkörper 4 vorzugeben. Für das dargestellte Ausführungsbeispiel verbleibt bei der Wechselwirkung zwischen dem Positionierelement 19 und dem Gegenelement 20 noch ein weiterer Freiheitsgrad zwischen dem Tragkörper 4 und dem Rahmenelement 3 vor deren Verbindung. Es versteht sich, dass für eine weitere Vorgabe der relativen Lage auch weitere Positionierelemente 19 und Gegenelemente 20 vorhanden sein können.

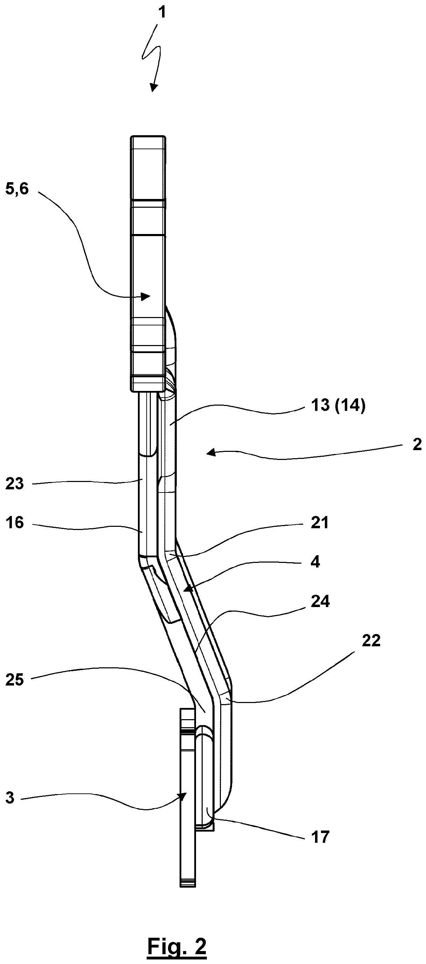

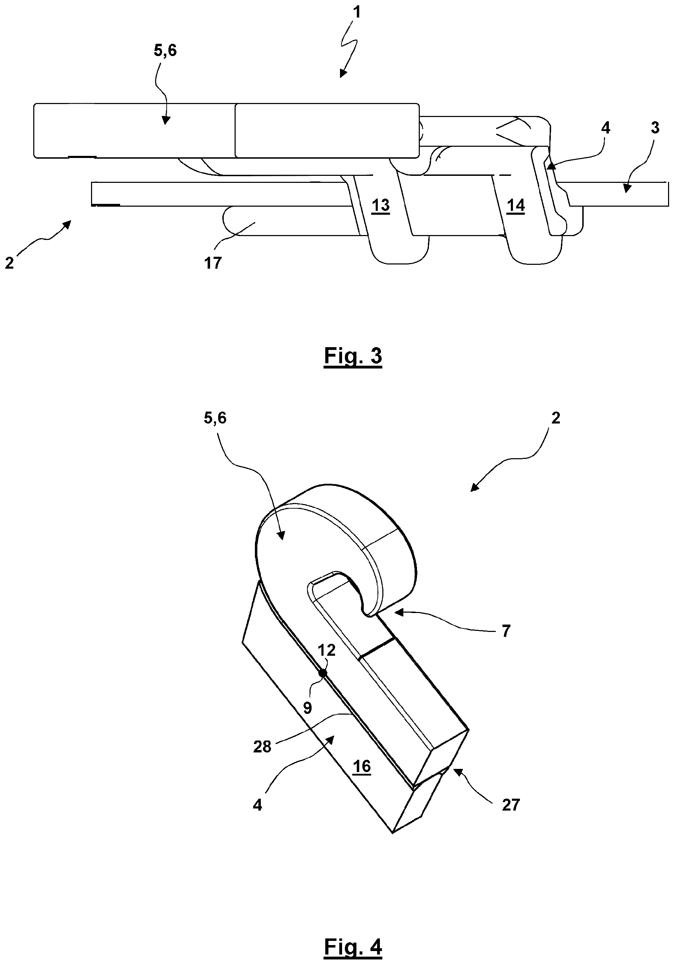

In **Fig. 2** **und** **3** ist zu erkennen, dass der Vertikalabschnitt 10 des Tragkörpers 4 in lateraler Richtung mit Kröpfungen 21, 22 gekröpft ist. Die Kröpfungen 21, 22 können beliebig geformte Kurvenverläufe aufweisen oder als Abknickungen ausgebildet sein. Ein oberer Endabschnitt 23 des Tragkörpers 4 geht über die Kröpfung 21 über in einen Verbindungsabschnitt 24, der wiederum über die Kröpfung 22 übergeht in einen unteren Endabschnitt 25, der vorzugsweise parallel zu dem Endabschnitt 23 orientiert ist. Über die Kröpfungen 21, 22 sowie den Verbindungsabschnitt 24 kann ein lateraler Versatz der Endabschnitte 23, 25 herbeigeführt werden und damit ein lateraler Versatz des Frontlader-Befestigungskörpers 5 gegenüber dem Rahmenelement-Befestigungsabschnitt 17 und damit dem Rahmenelement 3 und dem Arbeitsfahrzeug.

Erfolgt eine Verschweißung des Rahmenelement-Befestigungsabschnitts 17 mit dem Rahmenelement 3, kann ein Rand 26 des Rahmenelement-Befestigungsabschnitts 17 abweichend zu Fig. 1 nicht geradlinig ausgebildet sein, sondern beliebig kurvenförmig ausgebildet sein, um die Länge der Schweißnaht zu vergrößern.

**Fig. 4** zeigt die Arbeitsfahrzeug-Anbauvorrichtung gemäß Fig. 1 bis 3 in einem Teilschnitt in einem Befestigungsbereich 27.

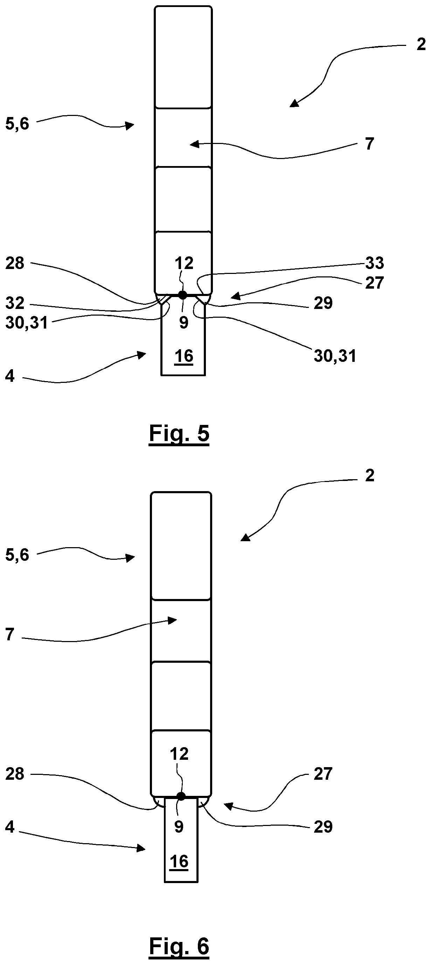

In der Draufsicht auf den Befestigungsbereich 27 gemäß Fig. 5 ist zu erkennen, dass in dem Befestigungsbereich 27 der Frontlader-Befestigungskörper 5 eine größere laterale Erstreckung hat als der Tragkörper 4, wobei die laterale Erstreckung des Tragkörpers 4 in dem Befestigungsbereich 27 der Wandstärke des Grundkörpers 16 des Tragkörpers 4 entsprechen kann. Um dennoch zu ermöglichen, dass Schweißnähte 28, 29 mit großem Querschnitt, u. U. auch mit mehreren übereinander gelegten Teilschweißnähten, eingesetzt werden können, verfügt der Tragkörper 4 in dem Übergangsbereich zu der Stirnfläche 12 auf beiden Seiten über eine Fase 30 oder einen Abschnitt 31 mit verringerter Dicke. Somit ergeben sich auf beiden Seiten von der Trennfuge zwischen den Stirnflächen 9, 12 oder der Kontaktfläche zwischen diesen (beispielsweise V-förmige) Ausnehmungen 32, 33 zwischen dem Tragkörper 4 und dem Frontlader-Befestigungskörper 5, in denen dann die Schweißnähte 28, 29 angeordnet sein können. Die Schweißnähte 28, 29 stehen lateral über den oberen Endbereich des Tragkörpers 4 über, ohne dass diese lateral über den Frontlader-Befestigungskörper 5 überstehen.

**Fig. 6** zeigt ein Ausführungsbeispiel, bei welchem keine Fase 30 oder kein Abschnitt 31 erforderlich ist, da der Unterschied der lateralen Erstreckung des Tragkörpers 4 und des Frontlader-Befestigungskörpers 5 im Bereich der Stirnflächen 9, 12 so groß ist, dass eine hinreichend große Schweißnaht 28, 29 im Bereich der sich ergebenden Stufe vorgesehen werden kann, ohne dass die Schweißnaht 28, 29 lateral über den Frontlader-Befestigungskörper 5 übersteht.

Möglich ist, dass mindestens eine Verstärkungsrippe 13, 14 lediglich auf einer Seite des Tragkörpers 4 angeordnet ist. Ebenfalls möglich ist aber, dass auf beiden Seiten des Tragkörpers 4 mindestens eine Verstärkungsrippe 13, 14 angeordnet ist.

Im Rahmen der Befestigung des Rahmenelement-Befestigungsabschnitts 17 an dem Rahmenelement 3 und/oder der Befestigung des Rahmenelements 3 an dem Arbeitsfahrzeug können auch an sich aus dem Stand der Technik bekannte konusförmige Verbindungs- und Zentrierkörper Einsatz finden.

Vorzugsweise sind die Schweißnähte 28, 29 zwei-, drei-, vier-, fünf- oder mehrlagig ausgebildet.

In Fig. 1 ist als weitere optionale Besonderheit dargestellt, dass der Tragkörper 4 ein Halteelement 34 für die Befestigung eines weiteren Bauteils an dem Tragkörper 4 aufweisen kann. Hierbei kann das Halteelement 34 während des Massivumformverfahrens zur Herstellung des Tragkörpers 4 erzeugt werden. Möglich ist aber auch, dass ein derartiges Halteelement 34 nachträglich an den Tragkörper 4 angeschweißt wird.

Möglich ist, dass die miteinander zu verbindenden Bestandteile der Arbeitsfahrzeug-Anbauvorrichtung 1 nicht nur lediglich (wie für das dargestellte Ausführungsbeispiel) aneinander anliegen und mittels Schweißnähten oder Verschraubungen aneinander befestigt werden, sondern zusätzlich eine Formgebung der Kontakt- und Verbindungsstellen derart erfolgt, dass zumindest Teilkräfte auch über einen Formschluss der Kontaktflächen übertragen werden.

Das Rahmenelement 3 ist vorzugsweise als Blechbauteil ausgebildet, welches auch in einem Blechumformvorgang geformt sein kann. Ebenfalls möglich ist, dass das Rahmenelement 3 als Schweißbaugruppe hergestellt ist. Möglich ist, dass das Blech, welches das Rahmenelement 3 bildet, oder Bleche, die dann als Schweißbaugruppe das Rahmenelement 3 bilden, in einem Plasmaschneidverfahren zugeschnitten werden.

Möglich ist, dass das Rahmenelement 3 auch über Ausklinkungen verfügt.

Möglich ist Weiteren, dass die Tragkörper 4, die Arbeitsfahrzeug-Anbauvorrichtungen 1 und die Arbeitsfahrzeug-Anbautürme 2 und/oder die Rahmenelemente 3 für unterschiedliche Seiten eines Arbeitsfahrzeuges gleich oder unterschiedlich ausgebildet sind.

### BEZUGSZEICHENLISTE

- 1: Arbeitsfahrzeug-Anbauvorrichtung
- 2: Arbeitsfahrzeug-Anbauturm
- 3: Rahmenelement
- 4: Tragkörper
- 5: Frontlader-Befestigungskörper
- 6: Knochen
- 7: Aufnahme
- 8: Aufnahme
- 9: Stirnfläche
- 10: Vertikalabschnitt
- 11: Horizontalabschnitt
- 12: Stirnfläche
- 13: Verstärkungsrippe
- 14: Verstärkungsrippe
- 15: Abrundung
- 16: Grundkörper
- 17: Rahmenelement-Befestigungsabschnitt
- 18: Befestigungsbohrung
- 19: Positionierelement
- 20: Gegenelement
- 21: Kröpfung
- 22: Kröpfung
- 23: Endabschnitt
- 24: Verbindungsabschnitt
- 25: Endabschnitt
- 26: Rand
- 27: Befestigungsbereich
- 28: Schweißnaht
- 29: Schweißnaht
- 30: Fase
- 31: Abschnitt
- 32: Ausnehmung
- 33: Ausnehmung
- 34: Halteelement

## Patentansprüche

1. Arbeitsfahrzeug-Anbauturm (2) mit einem Frontlader-Befestigungskörper (5) und einem Tragkörper (4), wobei
a) der Frontlader-Befestigungskörper (5) und der Tragkörper (4) separat voneinander gefertigt sind,
b) der Frontlader-Befestigungskörper (5) und der Tragkörper (4) miteinander verschweißt sind und
c) der Tragkörper (4) mittels eines Massivumformverfahrens hergestellt ist.

2. Arbeitsfahrzeug-Anbauturm (2) nach Anspruch 1, **dadurch gekennzeichnet, dass** der Tragkörper im Bereich der Schweißnaht (28; 29), über die der Frontlader-Befestigungskörper (5) mit dem Tragkörper (4) verschweißt ist, eine Fase (30) oder einen Abschnitt (31) mit verringerter Dicke aufweist, im Bereich welcher eine Schweißnaht (28; 29) angeordnet ist.

3. Arbeitsfahrzeug-Anbauturm (2) nach einem der vorhergehenden Ansprüche, **dadurch gekennzeichnet, dass** der Frontlader-Befestigungskörper (5) mittels eines Massivumformverfahrens oder Schmiedeverfahrens hergestellt ist.

4. Arbeitsfahrzeug-Anbauturm (2) nach einem der vorhergehenden Ansprüche, **dadurch gekennzeichnet, dass** der Frontlader-Befestigungskörper (5) und/oder der Tragkörper (2) eine Stirnfläche (9; 12) aufweisen, welche mit einer Toleranz von ± 1 mm gefertigt sind.

5. Arbeitsfahrzeug-Anbauturm (2) nach einem der vorhergehenden Ansprüche, **dadurch gekennzeichnet, dass** der Tragkörper (4) in dem dem Frontlader-Befestigungskörper (5) abgewandten Endbereich einen Rahmenelement-Befestigungsabschnitt (17) aufweist.

6. Arbeitsfahrzeug-Anbauturm (2) nach Anspruch 5, **dadurch gekennzeichnet, dass** der Rahmenelement-Befestigungsabschnitt (17) eine größere Erstreckung in Längsrichtung des Arbeitsfahrzeugs aufweist als ein benachbarter, darüber angeordneter Teilabschnitt des Tragkörpers (4).

7. Arbeitsfahrzeug-Anbauturm (2) nach Anspruch 5 oder 6, **dadurch gekennzeichnet, dass** der Rahmenelement-Befestigungsabschnitt (17) einen konvex geformten, konkav geformten, kurvenförmigen oder mäanderförmigen Rand (26) aufweist.

8. Arbeitsfahrzeug-Anbauturm (2) nach einem der vorhergehenden Ansprüche, **dadurch gekennzeichnet, dass** der Tragkörper (4) mindestens eine Verstärkungsrippe (13; 14) aufweist, wobei sich insbesondere
a) die mindestens eine Verstärkungsrippe (13; 14) von dem Rahmenelement-Befestigungsabschnitt (17) in Richtung des Frontlader-Befestigungskörpers (5) erstreckt und/oder
b) zwei Verstärkungsrippen (13; 14) in horizontaler Richtung versetzt zueinander angeordnet sind und/oder
c) mindestens eine Verstärkungsrippe (13; 14) einen abgerundeten Querschnitt aufweist.

9. Arbeitsfahrzeug-Anbauturm (2) nach einem der vorhergehenden Ansprüche, **dadurch gekennzeichnet, dass** die Härte und/oder Festigkeit des Frontlader-Befestigungskörpers (5) infolge
a) des gewählten Materials und/oder
b) des eingesetzten Herstellungsverfahrens und/oder der bei der Herstellung eingesetzten Prozessparameter
größer ist als die Härte und/oder Festigkeit des Tragkörpers (4).

10. Arbeitsfahrzeug-Anbauturm (2) nach einem der vorhergehenden Ansprüche, **dadurch gekennzeichnet, dass** der Tragkörper (4) eine Positionierhilfe (19) für eine Vorgabe einer Relativlage
a) des Tragkörpers (4) gegenüber dem Frontlader-Befestigungskörpers (5) und/oder
b) des Tragkörpers (4) gegenüber einem Rahmenelement (3)
aufweist.

11. Arbeitsfahrzeug-Anbauturm (2) nach einem der vorhergehenden Ansprüche, **dadurch gekennzeichnet, dass** an den Tragkörper (4) ein Halteelement (34) für ein Bauteil angeschweißt ist.

12. Arbeitsfahrzeug-Anbauturm (2) nach einem der vorhergehenden Ansprüche, **dadurch gekennzeichnet, dass** der Tragkörper (4) mindestens eine Kröpfung (21; 22) aufweist.

13. Arbeitsfahrzeug-Anbauvorrichtung (1) mit einem Arbeitsfahrzeug-Anbauturm (2) nach einem der vorhergehenden Ansprüche und einem Rahmenelement (3), wobei insbesondere
a) das Rahmenelement (3) gemeinsam mit dem Tragkörper (4) gefertigt ist oder
b) das Rahmenelement (3) separat von dem Tragkörper (4) gefertigt ist und das Rahmenelement (3) mit dem Tragkörper (4)
ba) verschraubt und/oder
bb) verschweißt und/oder
bc) vernietet und/oder
bd) mittels eines Formschlusses verbunden und/oder
be) verklebt
ist.

14. Set mit mehreren Arbeitsfahrzeug-Anbautürmen (2) nach einem der Ansprüche 1 bis 12 oder mehreren Arbeitsfahrzeug-Anbauvorrichtungen (1) nach Anspruch 13, wobei
a) die Arbeitsfahrzeug-Anbautürme (2) des Sets oder die Arbeitsfahrzeug-Anbauvorrichtungen (1) des Sets gleiche Tragkörper (4) aufweisen und
b) die Arbeitsfahrzeug-Anbautürme (2) des Sets oder die Arbeitsfahrzeug-Anbauvorrichtungen (1) des Sets unterschiedliche Frontlader-Befestigungskörper (5) und/oder Rahmenelemente (3) aufweisen oder in dem Set die Tragkörper (4) an unterschiedlichen Positionen und/oder in unterschiedlichen Orientierungen mit baugleichen Frontlader-Befestigungskörpern (5) und/oder baugleichen Rahmenelementen (3) verbunden sind und
c) die Arbeitsfahrzeug-Anbautürme (2) oder Arbeitsfahrzeug-Anbauvorrichtungen (1) des Sets für Arbeitsfahrzeuge oder Frontlader unterschiedlicher Typen bestimmt sind.

15. Verfahren zur Herstellung eines Arbeitsfahrzeug-Anbauturms (2) nach einem der Ansprüche 1 bis 12, mit den folgenden Verfahrensschritten:
a) Fertigung des Frontlader-Befestigungskörpers (5) und des Tragkörpers (4) als separate Teile, wobei der Tragkörper (4) mittels eines Massivumformverfahrens hergestellt wird, und
b) Verschweißen des Frontlader-Befestigungskörpers (5) und des Tragkörpers (4) miteinander.
